# EUROPEAN PATENT APPLICATION

(11) **EP 1 119 183 A2**
(43) Date of publication of application: **25.07.2001**
(21) Application number: 01300462.7
(22) Date of filing: 19.01.2001
(51) Int. Cl.: H04N 1/00

(54) **Facsimile apparatus, information processing apparatus and method for data communication**

(30) Priority: 19.01.2000 JP 2000010658
(71) Applicant: SHARP KABUSHIKI KAISHA, Osaka 545-8522 (JP)
(72) Inventor: Ishikawa, Kazutoshi, Yamatokoriyama-shi, Nara (JP); Inami, Norikazu, Nara-shi, Nara (JP); Nakajiri, Takashi, Nara-shi, Nara (JP)
(74) Representative: Brown, Kenneth Richard

(57) **Abstract**

A facsimile apparatus is connected to an information processing apparatus having e-mail capability, and image-data is delivered by e-mail over a network. An information processing apparatus (21) is provided with the capability to exchange messages by e-mail over a network. The facsimile apparatus (1) exchanges image data over a public switched telephone network (13), reads image data with a scanner unit (2), and prints image data with a printer (9). An operating unit (6) is provided with a plurality of keys, and the facsimile apparatus (1) is connected with a connection interface unit (11) to the information processing apparatus (21). Key data (FA) representing a predetermined key of the plurality of keys, setting data (FB) for setting this key data (FA) to e-mail mode, and recipient name data (FC) corresponding to the key code (FA) is set in the facsimile apparatus (1). When the predetermined key is activated, the data (FA to FC) is sent over the connection interface unit (11) to the information processing apparatus (21).

## Description

### BACKGROUND OF THE INVENTION

### 1. Field of the Invention

The present invention relates to a facsimile apparatus, an information processing apparatus such as a personal computer, and a method for data communication between these.

### 2. Description of the Related Art

In recent years, information processing apparatuses such as personal computers, have become widely popular, and their speed and functionality are steadily improved. On the other hand, facsimile apparatuses are connected to a public switched telephone network (PSTN), exchange image data over the public service telecommunications network, read in image data, and print image data, and there are multi-functional facsimile apparatuses available that can utilize the high functionality of an information processing apparatus by connecting them to such an information processing apparatus. Also, networks such as local area networks (LANs) and the internet have become popular in recent years, and e-mail systems for exchanging messages over such networks are becoming widespread. In this environment, systems in which a facsimile apparatus is equipped with e-mail capability have been proposed, for example an internet facsimile apparatus that can be connected directly to a network.

For internet facsimile apparatuses the following systems are known:
(1) Provider-dependent systems using a G3 facsimile apparatus (facsimile apparatus using an analog line), and using a provider offering internet facsimile services;
(2) Network direct link systems equipped with a network interface card (NIC) and connecting by internet mail to the internet;
(3) Network direct link systems equipped with a network interface card (NIC) for internet communication between facsimile apparatuses of the same system; and
(4) Systems for facsimile communication between like apparatuses and between system (2) apparatuses over a dial-up connection to an internet service provider (ISP).

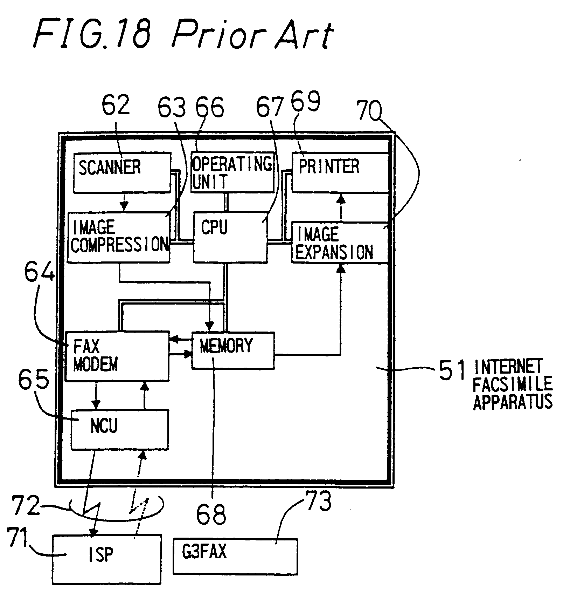

Fig. 18 is a block diagram of a conventional internet facsimile apparatus 51 in accordance with system (1). This facsimile apparatus 51 comprises a scanner unit 62, an image compression unit 63, a facsimile modem unit 64, an NCU (network control unit) 65, an operating unit 66, a CPU (central processing unit) 67, a memory unit 68, a printer unit 69, and an image expansion unit 70. The CPU 67 performs the integrated control of the operation of the scanner unit 62, the image compression unit 63, the facsimile modem unit 64, the NCU 65, the operating unit 66, the memory unit 68, the printer unit 69, and the image expansion unit 70. The operating unit 66 is provided with a plurality of keys for entering numerical, alphabetic and symbolic data by pressing these keys. The scanner unit 62 reads image data from a document, and outputs the read image data as digital data. The image compression unit 63 compresses the image data from the scanner unit 62 by a compression method such as run length encoding or Huffman encoding. The memory unit 68 can be for example a random access memory (RAM), and temporarily stores the image data compressed by the image compression unit 63 and the received image data.

The facsimile modem 64 converts image data stored in the memory unit 68 from dc signals into ac signals, and sends them over the NCU 65 to the public switched telephone network 72. It also receives image data over the NCU 65 from the public switched telephone network 72, converts them from ac signals into dc signals, and passes them to the memory unit 68. The NCU 65 is a network control unit for using the public switched telephone network 72, which is comprised of analog communication lines, as a transmission medium, and connects over the public switched telephone network 72 to an internet service provider (ISP) 71 or a G3 facsimile apparatus 73. The facsimile apparatus 51 performs facsimile exchange with a G3 facsimile apparatus 73. The image expansion unit 70 expands and outputs the compressed image data that has been read in with the scanner unit 62 or received and stored in the memory unit 68. The printer unit 69 prints out the image data from the image expansion unit 70 on recording paper.

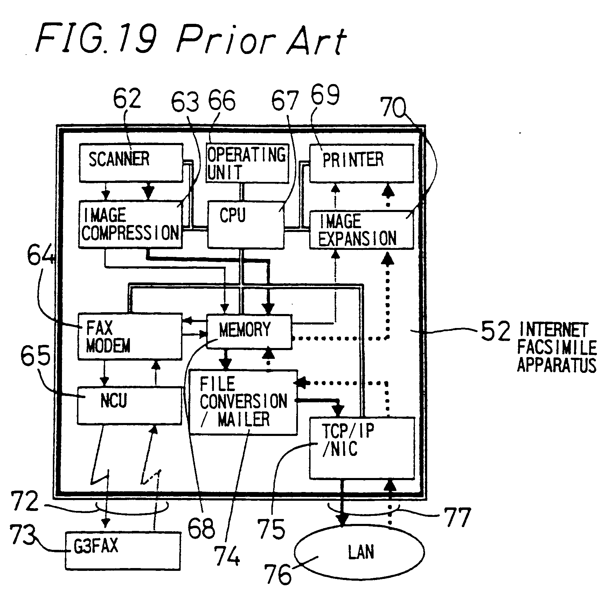

Fig. 19 is a block diagram of a conventional internet facsimile apparatus 52 in accordance with systems (2) and (3). This facsimile apparatus 52 is configured similarly to the above-described facsimile apparatus 51, so that corresponding structural element are denoted by the same reference symbols, and further explanations thereof have been omitted. The facsimile apparatus 52 also comprises a file conversion / mailer unit 74 and a TCP/IP/NIC unit 75 in addition to the structural elements of the facsimile apparatus 51. The NCU unit 65 is connected over the public switched telephone network 72 to a G3 facsimile apparatus 73. The facsimile apparatus 52 performs facsimile exchange with the G3 facsimile apparatus 73. The file conversion / mailer unit 74 converts the image data stored in the memory unit 68 into a predetermined file format. Moreover, the file conversion / mailer unit 74 converts received image data into a predetermined file format. The TCP/IP/NIC unit 75 is connected over a network 77 to a local area network (LAN) 76.

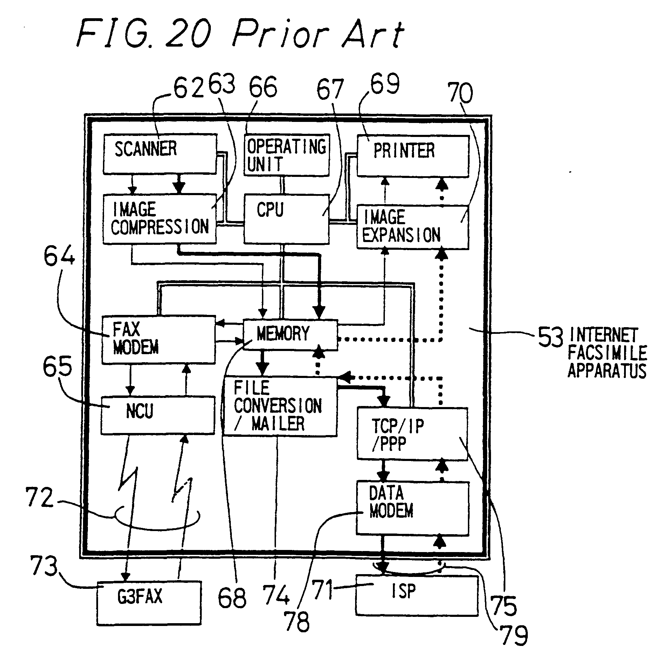

Fig. 20 is a block diagram of a conventional internet facsimile apparatus 53 in accordance with system (4). This facsimile apparatus 53 is configured similarly to the above-described facsimile apparatus 52, so that corresponding structural element are denoted by the same reference symbols, and further explanations thereof have been omitted. The facsimile apparatus 53 also comprises a data modem unit 78 in addition to the structural elements of the facsimile apparatus 52. The data modem unit 78 is arranged between the TCP/IP/NIC unit 75 and a network 79. The data modem unit 78 is connected over the network 79 to the internet service provider (ISP) 71.

Furthermore, Japanese Unexamined Patent Publication JP-A 8-139750 (1996) discloses a communication system, in which a facsimile apparatus and an information processing apparatus are connected over a public switched telephone network, the information processing apparatus and a plurality of terminals are connected over an Ethernet, and when the information processing apparatus receives an e-mail from the facsimile apparatus over the public switched telephone network, this e-mail is immediately sent to the terminal specified by the address.

Japanese Unexamined Patent Publication JP-A 9-261366 (1997) discloses a configuration, in which a facsimile apparatus is connected to the public switched telephone network over switching means, an information processing apparatus having a modem is connected to the switching means, and the switching means switches the connection to the public switched telephone network between the facsimile apparatus and the information processing apparatus.

However, although with the internet facsimile apparatuses according to system (1) the hardware costs can be kept at a minimum, because pre-existent G3 facsimile apparatuses can be used, it is difficult to specify e-mail addresses, and an additional burden is placed on the user, as it is necessary to make a contract with a provider who offers facsimile service. With the internet facsimile apparatuses according to system (2), it is possible to distribute e-mails to multiple addresses, and to use a G3 facsimile as printer and scanner, but software for an e-mail send/receive protocol (SMTP/POP) and a transmission protocol (TCP/IP) is necessary. Furthermore, a NIC card is necessary to convert the facsimile data into the file format of the e-mail attachment and speed up the data processing, which increases the hardware costs.

With the internet facsimile apparatuses according to system (3), facsimile communication over a network in real-time is possible, and software for converting e-mails into files or for exchanging e-mails is not necessary, but the hardware costs are about as high as when a NIC card is necessary, it is necessary to perform the frame processing according to the T.38 recommendation of the internet facsimile protocol (IFP) for example. And with the internet facsimile apparatuses according to system (4), it is possible to establish a dial-up connection to an access point of a common service provider, and to communicate by e-mail over the internet. However, also for this system, software for file conversion and for sending/receiving e-mails is necessary, and instead of a NIC card, a PPP (point-to-point protocol) or a data modem is necessary for connecting to the internet service provider (ISP), which increases the hardware costs.

Thus, with the internet facsimile apparatuses according to the systems (1) to (4), the communication costs can be lowered and the transmission speed can be increased in comparison to G3 facsimile apparatuses, which are connected to a public switched telephone network, and it is also possible to distribute e-mails to multiple addresses, so that they are very convenient and therefore very popular. However, in the course of faster data processing, the data control becomes more complicated, and circuits supporting the connection to the internet are necessary, which increases the hardware costs.

### SUMMARY OF THE INVENTION

It is an object of the invention to provide a facsimile apparatus, an information processing apparatus, and a method for data communication between the two, in which the facsimile apparatus can be easily connected to an information processing apparatus provided with e-mail capability, so as to deliver image data from the facsimile apparatus by e-mail using the information processing apparatus.

The invention provides a facsimile apparatus comprising:
facsimile sending/receiving means for sending and receiving image data by facsimile over a connected public switched telephone network;
reading means for reading image data;
printing means for printing image data;
a plurality of keys;
a connection interface for connection to an information processing apparatus provided with the capability of sending and receiving messages by e-mail over a connected network;
storing means for storing key data FA representing a predetermined key of the plurality of keys, setting data FB for setting this key data FA to e-mail mode, and recipient name data FC corresponding to the key data FA; and
sending means for sending the image data, key data FA, setting data FB, and recipient name data FC over the connection interface to the information processing apparatus when the predetermined key has been actuated.

In accordance with this invention, the facsimile apparatus is connected over the connection interface to an information processing apparatus. The information processing apparatus can be, for example, a personal computer or server provided with e-mail capability connected to an existing local area network (LAN) or the internet. The connection interface unit is, for example, a parallel interface such as an IEEE 1284 interface. When actuating the predetermined key that has been set on the facsimile apparatus of the invention, the image data and the data FA to FC are sent over the connection interface to the information processing apparatus. As mentioned above, the information processing apparatus is provided with e-mail capability, and using this e-mail capability, image data sent from the facsimile apparatus can be delivered over a network, based on the data FA to FC.

Consequently, it is possible to deliver image data from a facsimile apparatus by e-mail without making a contract with a selected provider supporting internet facsimile apparatuses, but with the simple and inexpensive configuration of connecting a facsimile apparatus to an information processing apparatus provided with e-mail capability. Furthermore, it is possible to deliver image data from the facsimile apparatus by e-mail simply by actuating a predetermined key on the facsimile apparatus, so that the user operation is simple and very convenient. Thus, with the facsimile apparatus of the invention, the same functions as with an internet facsimile apparatus can be realized at low cost and with simple operation.

In accordance with the invention, the facsimile apparatus comprises a connection interface for connecting the facsimile apparatus to an information processing apparatus, so that it is possible to deliver image data from the facsimile apparatus by e-mail simply by connecting the facsimile apparatus to an information processing apparatus provided with e-mail capability. Consequently, this configuration is simple and inexpensive. Furthermore, it is possible to deliver image data by e-mail simply by actuating a predetermined key on the facsimile apparatus, so that the user operation is simple.

It is preferable that the facsimile apparatus further comprises receiving means for receiving the key data FA, the setting data FB, and the recipient name data FC over the connection interface from the information processing apparatus and setting them.

With this configuration, the key data FA representing a predetermined key of the plurality of keys, the setting data FB for setting the key data FA to e-mail mode, and the recipient name data FC corresponding to the key code FA are sent from the information processing apparatus, set, and then stored in the facsimile apparatus, so that it is sufficient to set the data on the information processing apparatus, and unnecessary to set them on the facsimile apparatus, which facilitates the operation of the facsimile apparatus.

Furthermore, with this configuration, the data FA to FC is sent from the information processing apparatus to make the settings on the facsimile apparatus, so that it is not necessary to set the data on the facsimile apparatus.

It is preferable that the image data that is sent by the sending means is read in by the reading means.

With this configuration, the image data read in by the reading means and the data FA to FC are sent over the connection interface to the information processing apparatus when actuating the predetermined key on the facsimile apparatus. As mentioned above, the information processing apparatus is provided with e-mail capability. Consequently, it is possible that image data that has been read in by the reading means of the facsimile apparatus and sent out are delivered by e-mail over a network.

Furthermore, with this configuration, it is possible to deliver image data that has been read in by the reading means of the facsimile apparatus over a network using the e-mail capability the information processing apparatus is provided with.

It is preferable that the image data sent by the sending means is image data that has been received by facsimile with the sending/receiving means.

With this configuration, the image data received by facsimile with the sending/receiving means and the data FA to FC is sent over the connection interface to the information processing apparatus when actuating the predetermined key on the facsimile apparatus. As mentioned above, the information processing apparatus is provided with e-mail capability. Consequently, it is possible that image data that has been received by facsimile with the sending/receiving means of the facsimile apparatus and sent out is delivered by e-mail over a network.

Furthermore, with this configuration, it is possible to deliver image data that has been received by facsimile with the sending/receiving means of the facsimile apparatus over a network using the e-mail capability the information processing apparatus is provided with.

It is preferable that the facsimile apparatus further comprises data deleting means for deleting the image data received by the facsimile sending/receiving means before or after printing the image data.

With this configuration, the image data is deleted after it has been received or after it has been received and printed. Consequently, unnecessary data is deleted from the means for storing image data of the facsimile apparatus, and the storing means can be used more efficiently. Deleting the image data after printing them, it is possible to confirm the image data that has been received and delivered by e-mail. Thus, it is possible to treat received image data differently depending on their importance, for example to delete not so important image data without printing them, and to delete more important image data after printing them.

Furthermore, with this configuration, the image data of the facsimile apparatus is deleted after it has been received or after it has been received and printed, so that the image data storing means of the facsimile apparatus can be used more efficiently. Deleting the image data after printing them, it is possible to confirm the image data that has been received by facsimile and delivered by e-mail.

The invention provides an information processing apparatus provided with a capability of sending and receiving messages by e-mail over a connected network, and connected to one of the above-described facsimile apparatuses, the information processing apparatus comprising:
storing means for storing key data PA representing a predetermined key of the plurality of keys that the connected facsimile apparatus is provided with, setting data PB for setting this key code PA to e-mail mode, recipient name data PC corresponding to the key code PA, and a recipient address PD corresponding to the key data PA; and
receiving means for receiving image data, key data FA, setting data FB, and recipient name data FC from the connected facsimile apparatus;
wherein the key data PA matching with the key data FA received from the facsimile apparatus is retrieved from the storing means, it is determined whether the recipient name data PC corresponding to the retrieved key data PA match with the recipient name data FC received from the facsimile apparatus, and the received image data is sent by e-mail to the recipient address PD corresponding to the matching retrieved recipient name data PC.

With this configuration, a facsimile apparatus having a connection interface for connection to an information processing apparatus as described above is connected to the information processing apparatus. As mentioned above, the information processing apparatus can be, for example, an apparatus provided by the user, and can be a personal computer or server provided with e-mail capability connected to a network such as an already existing local area network (LAN) or the internet. The image data and the data FA to FC that has been sent over the connection interface of the facsimile apparatus when actuating the predetermined key that has been set on the facsimile apparatus is received by the information processing apparatus. As mentioned above, the information processing apparatus is provided with e-mail capability, and the received image data is delivered by e-mail over the network to a predetermined address, based on the received data FA to FC. Consequently, it is possible to deliver image data from the facsimile apparatus by e-mail at low cost, simply by connecting the facsimile apparatus to an information processing apparatus provided with e-mail capability.

Furthermore, with this configuration, a facsimile apparatus having a connection interface as described above is connected to an information processing apparatus provided with e-mail capability. Based on the received data FA to FC, the information processing apparatus delivers by e-mail the image data received from the facsimile apparatus to the predetermined address PD on the network. Consequently, the image data from the connected facsimile apparatus can be delivered by e-mail easily and at low cost.

It is preferable that the information processing apparatus further comprises sending means for sending the key data FA, the setting data FB, and the recipient name data FC to the connected facsimile apparatus.

With this configuration, the key data PA representing a predetermined key of the plurality of keys of the connected facsimile apparatus, setting data PB for setting this key data PA to e-mail mode, and the recipient name data PC corresponding to the key data PA, is sent from the information processing apparatus, set, and stored in the facsimile apparatus, so that it is sufficient to set the data on the information processing apparatus, and unnecessary to set them on the facsimile apparatus.

Furthermore, with this configuration, the data PA to PC set on the information processing apparatus is sent to the facsimile apparatus, and the data FA to FC in the facsimile apparatus is set based on the data PA to PC. Consequently, it is possible to perform the settings of the facsimile apparatus on the information processing apparatus.

The invention provides a method for data communication between any of the above-described facsimile apparatuses and any of the above-described information processing apparatuses comprising the steps of:
sending image data, key data FA, setting data FB and recipient name data FC from the facsimile apparatus to the information processing apparatus when actuating a predetermined key of the facsimile apparatus; and
receiving the image data, the key data FA, the setting data FB, and the recipient name data FC with the information processing apparatus from the facsimile apparatus, and sending the received image data by e-mail, based on the received key data FA, setting data FB, and recipient name data FC.

With this configuration, an information processing apparatus as described above, that may be a personal computer or server provided with e-mail capability connected to a network such as an already existing local area network (LAN) or the internet is connected to a facsimile apparatus having a connection interface for connection with the information processing apparatus, and by simply actuating a predetermined key set on the facsimile apparatus, image data can be sent from the facsimile apparatus over the connection interface to the information processing apparatus and delivered to a predetermined address on the network using the e-mail capability the information processing apparatus is provided with. Consequently, with the data communication method of the invention, image data from the facsimile apparatus can be delivered by e-mail easily and at low cost, simply by connecting a facsimile apparatus to an information processing apparatus provided with e-mail capability. Furthermore, image data from the facsimile apparatus can be delivered by e-mail with the simple operation of actuating a predetermined key on the facsimile apparatus, which is very convenient.

With this configuration, the image data and the data FA to FC can be exchanged between the facsimile apparatus and the information processing apparatus, and image data from the facsimile apparatus can be delivered by e-mail easily and at low cost.

### BRIEF DESCRIPTION OF THE DRAWINGS

Other and further objects, features, and advantages of the invention will be more explicit from the following detailed description taken with reference to the drawings wherein:
Fig. 1 is a block diagram of a facsimile apparatus 1 in an embodiment of the invention;
Fig. 2 is a block diagram of an information processing apparatus 21 connected to the facsimile apparatus 1;
Fig. 3 is a simple flowchart illustrating how the facsimile apparatus 1 operates when sending an e-mail;
Fig. 4 is a simple flowchart illustrating how the information processing apparatus 21 operates when sending an e-mail;
Fig. 5 is a flowchart illustrating how the information processing apparatus 21 operates when delivering an e-mail;
Fig. 6 is a flowchart showing in detail how the information processing apparatus 21 operates when an e-mail is sent;
Fig. 7 is a flowchart showing in detail how the facsimile apparatus 1 operates when an e-mail is sent;
Fig. 8 shows the sequence for delivering image data that has been read in by the scanner unit 2 of the facsimile apparatus 1, by e-mail;
Fig. 9 shows the sequence for delivering image data that has been received by the facsimile apparatus 1, by e-mail;
Fig. 10 illustrates the stored content of the hard disk unit 24 of the information processing apparatus 21;
Fig. 11 illustrates the data sent from the information processing apparatus 21 to the facsimile apparatus 1;
Fig. 12 illustrates the stored content of the memory unit 8 of the facsimile apparatus 1;
Fig. 13 illustrates a print-out example of the data stored in the information processing apparatus 21;
Fig. 14 illustrates another print-out example of the data stored in the information processing apparatus 21;
Fig. 15 illustrates a print-out example of the data stored in the facsimile apparatus 1;
Fig. 16 illustrates another print-out example of the data stored in the facsimile apparatus 1;
Fig. 17 illustrates an application example on the side of the information processing apparatus 21 when delivering an e-mail;
Fig. 18 is a block diagram of a conventional internet facsimile apparatus 51;
Fig. 19 is a block diagram of a conventional internet facsimile apparatus 52; and
Fig. 20 is a block diagram of a conventional internet facsimile apparatus 53.

### DETAILED DESCRIPTION OF THE PREFERRED EMBODIMENTS

Now referring to the drawings, preferred embodiments of the invention are described below.

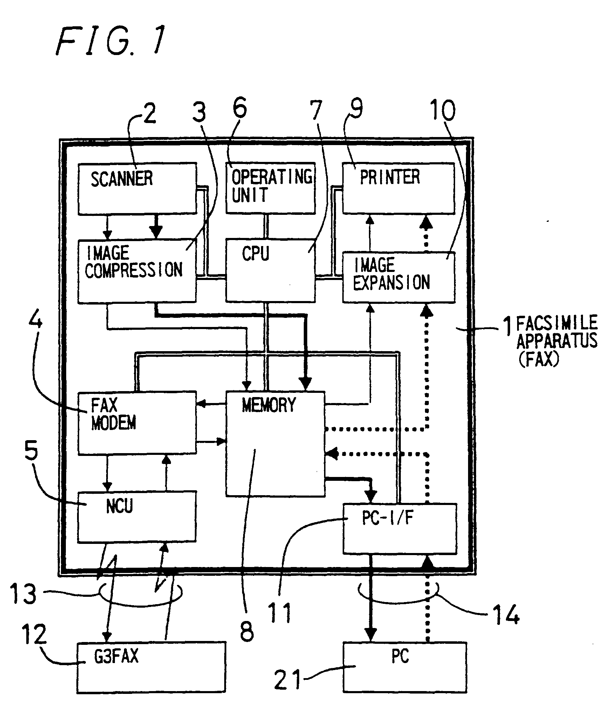

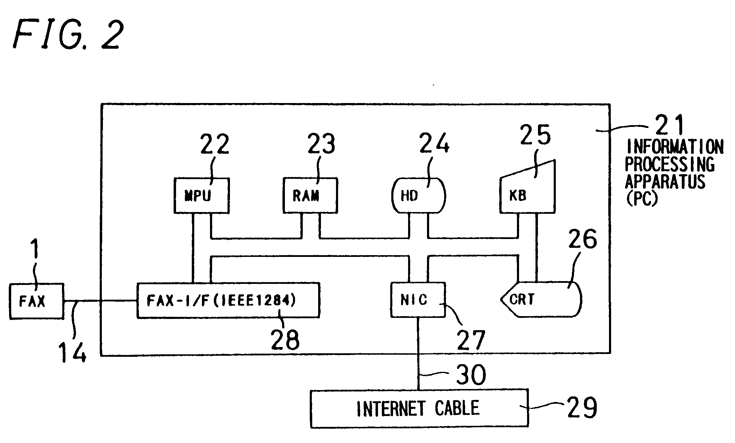

Fig. 1 is a block diagram of a facsimile apparatus (FAX) 1 in an embodiment of the invention. Fig. 2 is a block diagram of an information processing apparatus (PC) 21 connected to this facsimile apparatus 1. First of all, the facsimile apparatus 1 is explained with reference to Fig. 1. The facsimile apparatus 1 includes a scanner unit 2, an image compression unit 3, a facsimile modem unit 4, an NCU 5, an operating unit 6, a CPU 7, a memory unit 8, a printer unit 9, an image expansion unit 10, and a connection interface (PC-I/F) unit 11 for connection to the information processing apparatus 21, and is configured in accordance with IEEE standards.

The CPU 7 performs the integrated control of the operation of the scanner unit 2, the image compression unit 3, the facsimile modem unit 4, operating unit 6, the memory unit 8, the printer unit 9, the image expansion unit 10, and the connection interface unit 11. The operating unit 6 is provided with a plurality of keys for entering numerical, alphabetic and symbolic data that is actuated by pressing them down. The scanner unit 2 reads image data from a document, and outputs the read image data as digital data. The image compression unit 3 compresses the image data from the scanner unit 2 by an encoding method such as run length encoding or Huffman encoding. The memory unit 8 can be for example a RAM, and temporarily stores the image data compressed by the image compression unit 3 and the received image data.

The facsimile modem unit 4 converts image data stored in the memory unit 8 from dc signals into ac signals, and sends them over the NCU 5 to the public switched telephone network 13. It also receives image data over the NCU 5 from the public switched telephone network 13, converts them from ac signals into dc signals, and passes them to the memory unit 8. The NCU 5 is a network control unit for using the public switched telephone network 13, which is comprised of analog communication lines, as a transmission medium, and is connected over the public switched telephone network 13 to a G3 facsimile apparatus 12. The facsimile apparatus 1 exchanges facsimile data with the G3 facsimile apparatus 12. The image expansion unit 10 expands the compressed image data that has been received or read in with the scanner unit 2 and stored in the memory unit 8. The printer unit 9 prints out the image data from the image expansion unit 10 on recording paper.

The connection interface unit 11 is, for example, a parallel interface such as an IEEE 1284 interface, and this connection interface unit 11 is connected over a local area network (LAN) 14 to the information processing apparatus 21. The information processing apparatus 21 is for example the apparatus of a user, which can be connected to an access point (AP) of an internet service provider (ISP) by a dial-up PPP (point-to-point protocol) connection, and can be realized as a personal computer or server provided with e-mail capability for exchanging messages over a network it is connected to. The connection interface unit 11 sends the image data stored in the memory unit 8 over the LAN 14 to the information processing apparatus 21, and passes image data received over the LAN 14 from the information processing apparatus 21 to the memory unit 8. Thus, by sending the image data of the facsimile apparatus 1 to an information processing apparatus 21 provided with e-mail capability, the image data can be delivered by e-mail communication using the information processing apparatus 21.

In the facsimile apparatus 1, it is possible to set a key code FA representing a predetermined key of the plurality of keys that the facsimile apparatus 1 is provided with, a code FB for setting this key code to e-mail mode, a recipient name FC corresponding to this key code, a code FE expressing that received facsimile data is to be delivered by e-mail, and a code FF expressing that received facsimile data is to be printed. The data FA to FC, FE and FF is set beforehand with the information processing apparatus 21, based on the data PA to PC, PE and PF explained below, which is sent to the facsimile apparatus 1.

The following is an explanation of the information processing apparatus 21 with reference to Fig. 2. The information processing apparatus 21 comprises an MPU (microprocessor unit) 22, a RAM unit 23, a hard disk unit 24, a keyboard unit 25, a CRT (cathode ray tube) unit 26, a NIC unit 27, and a connection interface (FAX-I/F) unit 28 for connection to the facsimile apparatus 1. As mentioned above, the information processing apparatus 21 is for example an apparatus provided by the user, and can be realized as a personal computer or server provided with e-mail capability. Image data received over the connection interface unit 11 of the facsimile apparatus is delivered over an internet cable 29 to a predetermined address on the internet using the e-mail capability provided by the information processing apparatus 21.

The MPU 22, which is for example a microprocessor, is connected to the RAM unit 23, the hard disk unit 24, the keyboard unit 25, the CRT unit 26, the NIC unit 27, and the connection interface unit 28. The keyboard unit 25 is provided with a plurality of keys with which an operator of the information processing apparatus 21 can enter various instructions by actuating predetermined keys. The CRT unit 26 displays the state of the information processing apparatus 21. The RAM unit 23 temporarily stores the received image data. The hard disk unit 24 stores for example the system program of the information processing apparatus 21.

The connection interface unit 28 is realized, for example, as a parallel interface in accordance with IEEE 1284 and connected over the LAN 14 to the facsimile apparatus 1. The NIC unit 27 realized by a NIC card is connected over a network 30 such as a LAN or the internet, to a network terminal other than the information processing apparatus 21.

In the information processing apparatus 21, it is possible to set a key code PA representing a predetermined key of the plurality of keys that the facsimile apparatus 1 is provided with, a code PB for setting this key code to e-mail mode, a recipient name PC corresponding to this key code, a recipient address PD corresponding to the key code, a code PE expressing that received facsimile data is to be delivered by e-mail, and a code PF expressing that the received facsimile data is to be printed. Of the data PA to PF set in the information processing apparatus 21, the data PA to PC, PE and PF is sent to the facsimile apparatus 1, and is set as the data FA to FC, FE and FF in the facsimile apparatus 1. Of the set data PA to PF, the data PA to PD is stored in the hard disk unit 24.

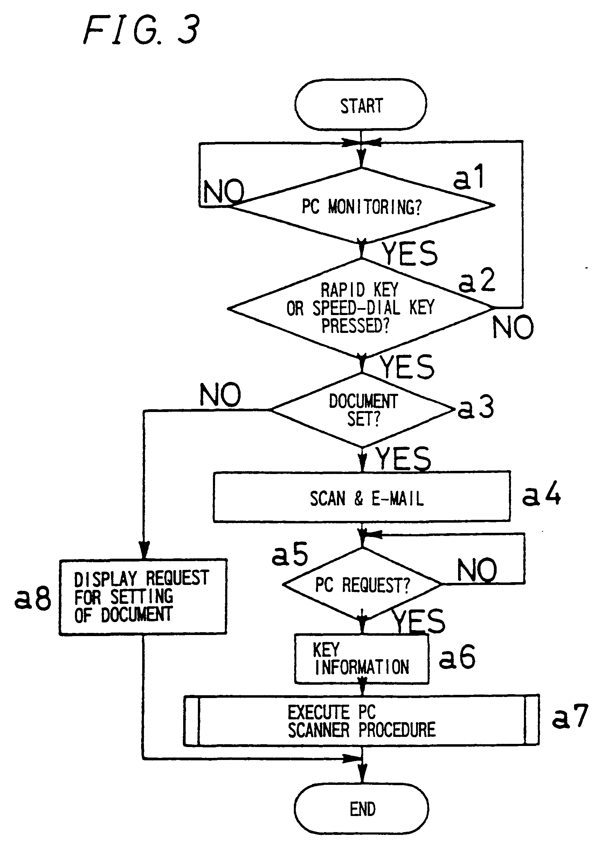

Fig. 3 is a simple flowchart illustrating how the facsimile apparatus 1 operates when sending an e-mail. At step a1, the operation of the facsimile apparatus is monitored. When a predetermined key on the operating unit 6 is pressed at step a2, then the procedure advances to step a3. Here, "predetermined key" means a key represented by the key code FA. This key is set to e-mail mode by the code FB, and it is possible to switch into the e-mail mode by pressing this key. More specifically, the predetermined key can be a rapid key, a speed-dial key or a one-touch key for specifying an addressee. It should be noted that it is also possible to specify a speed-dial number instead of pressing a predetermined key.

In step a3, it is determined whether a document has been set in the scanner unit 2. When a document has been set in the scanner unit 2, then the procedure advances to step a4. When no document has been set in the scanner unit, then the procedure advances to step a8, a request for setting a document is made, and the operation is terminated. The request for setting a document is made visually, but it can also be made acoustically. At step a4, image data is read in by scanning the set document. The image data that has been read in is the image data that is sent by e-mail to a predetermined mail address on the network 30, that is, to the recipient address PD, using the e-mail capability provided by the information processing apparatus 21 connected by the connection interface unit 11.

When at the next step a5 there is a request for sending key information by the information processing apparatus 21, then the procedure advances to step a6, and the facsimile apparatus 1 sends the key code FA, the code FB for setting this key code to e-mail mode, and the recipient name FC corresponding to this key code as the key information to the information processing apparatus 21. In the following step a7, the information processing apparatus 21 performs a scanning procedure, which terminates the operation by sending the image data to the information processing apparatus 21.

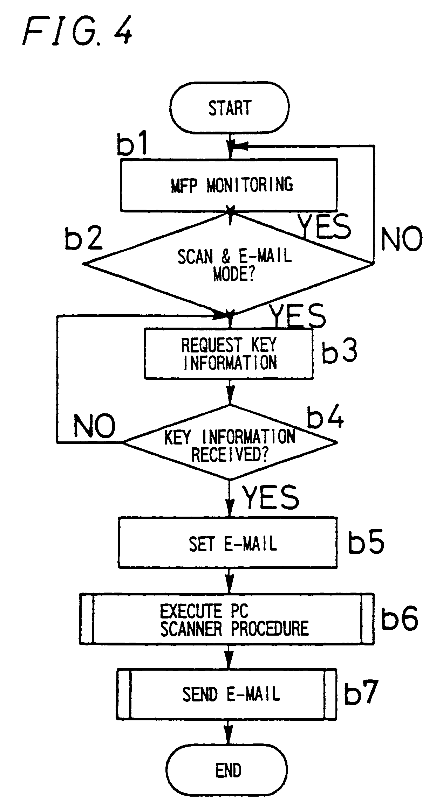

Fig. 4 is a simple flowchart illustrating how the information processing apparatus 21 operates when sending an e-mail. At step b1, the operation of the facsimile apparatus 1 is monitored. When at the following step b2 the facsimile apparatus 1 is set to the e-mail mode, and image data is read in by scanning a document, then the procedure advances to step b3, and the facsimile apparatus 1 is requested to send key information. When at the following step b4 key information, that is, the data FA to FC is received from the facsimile apparatus 1, then the procedure advances to step b5, and an e-mail is set in the information processing apparatus 21. At the following step b6, the information processing apparatus 21 performs a scanning procedure, whereby image data is received from the facsimile apparatus 1. At the next step b7, the received image data is delivered by e-mail, and the operation is terminated.

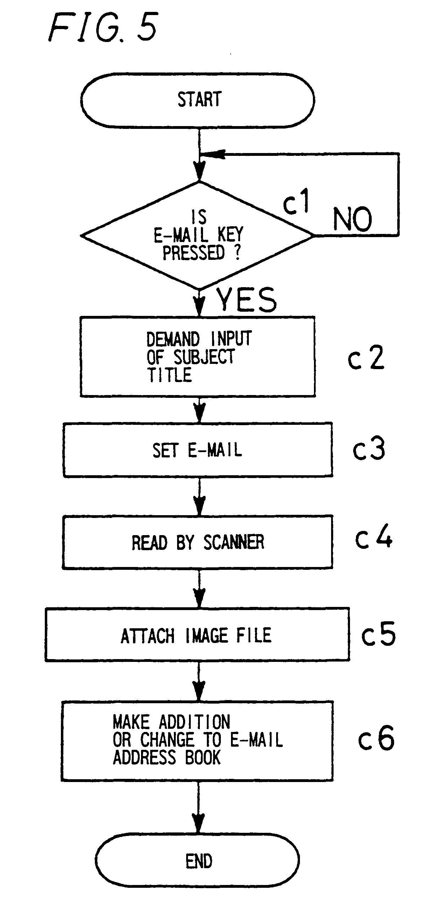

Fig. 5 is a flowchart illustrating the operation of the information processing apparatus 21 when delivering an e-mail. When an e-mail key on the information processing apparatus 21 is pressed at step c1, the procedure advances to step c2, and a subject title is created. At the next step c3, the e-mail is set, the scanner is set in the following step c4, and at step c5, an image file of a predetermined format is attached. Here, the file format can be chosen as appropriate by the user of the information processing apparatus 21. In the next step c6, an attachment or change is made to the e-mail address book, and the operation is terminated.

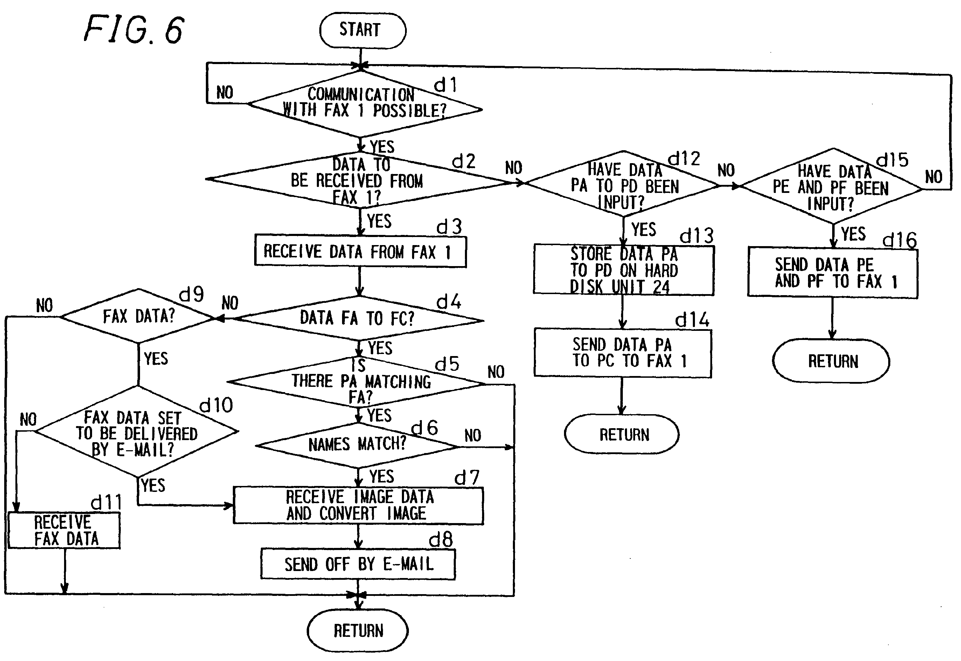

Fig. 6 is a flowchart showing in detail the operation of the information processing apparatus 21 when an e-mail is sent. When communication with the facsimile apparatus 1 becomes possible at step d1, the procedure advances to step d2, and it is determined whether there is data to be received from the facsimile apparatus 1. When there is data to be received, the procedure advances to step d3, and when there is no data to be received, the procedure advances to step d12. At step d3, data is received from the facsimile apparatus 1. At the following step d4, it is determined whether the received data is the e-mail mode initiating data, that is, whether the received data is the data FA to FC. When it is the e-mail mode initiating data (data FA to FC), the procedure advances to step d5, and when it is not the e-mail mode initiating data (data FA to FC), the procedure advances to step d9.

At step d5, the key code PA matching the received key code FA is retrieved from the key codes stored in the hard disk unit 24 of the information processing apparatus 21. When there is a matching key code PA, the procedure advances to step d6, and when there is no matching key code PA, the procedure returns to step d1. At step d6, it is determined if the received recipient name FC matches with the recipient name PC associated with the retrieved key code PA. When they match, the procedure advances to step d7, and when they do not match, the procedure returns to step d1. At step d7, image data is received from the facsimile apparatus 1 and converted into a predetermined attachment format. At the following step d8, the converted image data is sent off by e-mail, and the procedure returns to step d1.

At step d9, it is determined whether the received data is facsimile data. When the received data is facsimile data, the procedure advances to step d10, and when the received data is not facsimile data, the procedure returns to step d1. At step d10, it is determined whether the received facsimile data is set to be delivered by e-mail. This is determined by the code PE set in the information processing apparatus 21, depending on whether the code FE, which is set by sending it from the information processing apparatus 21 to the facsimile apparatus 1, is included in the received data of step d4. When the code FE is included in the received data, which means that the image data is set to be delivered by e-mail, then the procedure advances to step d7, and when the code FE is not included in the received data, which means that the image data is not set to be delivered by e-mail, then the procedure advances to step d11, the facsimile data is received, and the procedure returns to d1.

At step d12, it is determined whether the data PA to PD has been input from the keyboard unit 25. When the data has been input, the procedure advances to step d13, and when they have not been input, the procedure advances to d15. At step d13, the data PA to PD that has been input is stored in the hard disk unit 24, and at the following step d14, the data PA to PC is sent to the facsimile apparatus 1, and the procedure returns to step d1. At step d15, it is determined whether the data PE and PF has been input from the keyboard unit 25. When the data has been input, the procedure advances to step d16, and when they have not been input, the procedure returns to step d1. At step d16, the data PE and PF is sent to the facsimile apparatus 1, and the procedure returns to d1.

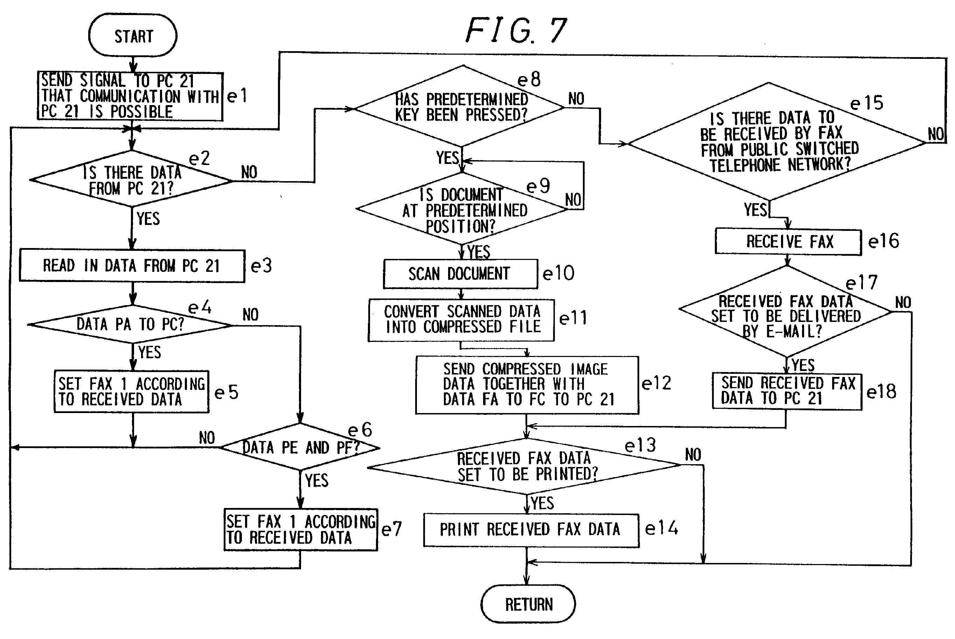

Fig. 7 is a flowchart showing in detail the operation of the facsimile apparatus 1 when an e-mail is sent. At step e1, a signal indicating that communication with the information processing apparatus 21 is possible is sent to the information processing apparatus 21. At the following step e2, it is determined whether there is data from the information processing apparatus 21. When there is data, then the procedure advances to step e3, and when there is no data, the procedure advances to step e8. At step e3, the data from the information processing apparatus 21 is read in. At the following step e4, it is determined whether the data that has been read in is the data PA to PC. When the data is the data PA to PC, then the procedure advances to step e5, and when the data is not the data PA to PC, then the procedure advances to step e6. At step e5, the data FA to FC in the facsimile apparatus 1 is set in accordance with the corresponding received data PA to PC. Then, the procedure returns to step e2. At step e6, it is determined whether the data that has been read in is the data PE, PF. When the data is the data PE and PF, then the procedure advances to step e7, and when the data is not the data PE and PF, then the procedure returns to step e2. At step e7, the data FE and FF in the facsimile apparatus 1 is set in accordance with the received data PE and PF. Then, the procedure returns to step e2.

At step e8, it is determined whether a predetermined key set in the facsimile apparatus 1 has been pressed. When such key has been pressed, the procedure advances to step e9, and when such key has not been pressed, the procedure advances to step e15. When at step e9 a document has been set at a predetermined position in the scanner unit 2, then the procedure advances to step 10, and image data is read in by scanning the document. At the next step ell, the image data that has been read in is compressed, and at step e12, the compressed image data is sent to the information processing apparatus 21, together with the key information made up of the data FA to FC. At the following step e13, it is determined whether the image data that has been received by facsimile is set to be printed. This is determined by the code PF set in the information processing apparatus 21, depending on whether there is the code FF, which is set by sending it from the information processing apparatus 21 to the facsimile apparatus 1. When there is the code FF, which means that the image data that has been received by facsimile is set to be printed, then the procedure advances to step e14, the image data that has been received by facsimile is printed, and the procedure returns to step e1. When there is no code FF, which means that the image data that has been received by facsimile is not set to be printed, then the procedure immediately returns to step e1.

At step e15, it is determined whether there is data to be received by facsimile from the public switched telephone network 13. When there is data to be received by facsimile, the procedure advances to step e16, and when there is no data to be received by facsimile, then the procedure returns to step e2. At step e16, the data is received by facsimile. At the next step e17, it is determined whether the image data received by facsimile is set to be delivered by e-mail. This is determined by the code PE set in the information processing apparatus 21, depending on whether there is the code FE, which is set by sending it from the information processing apparatus 21 to the facsimile apparatus 1. When there is the code FE, which means that the image data received by facsimile is set to be delivered by e-mail, then the procedure advances to step e18, the image data that has been received by facsimile is sent mail to the information processing apparatus 21, and the procedure returns to step e13. When there is no code FE, which means that the image data received by facsimile is not set to be delivered by e-mail, then the procedure immediately returns to step el.

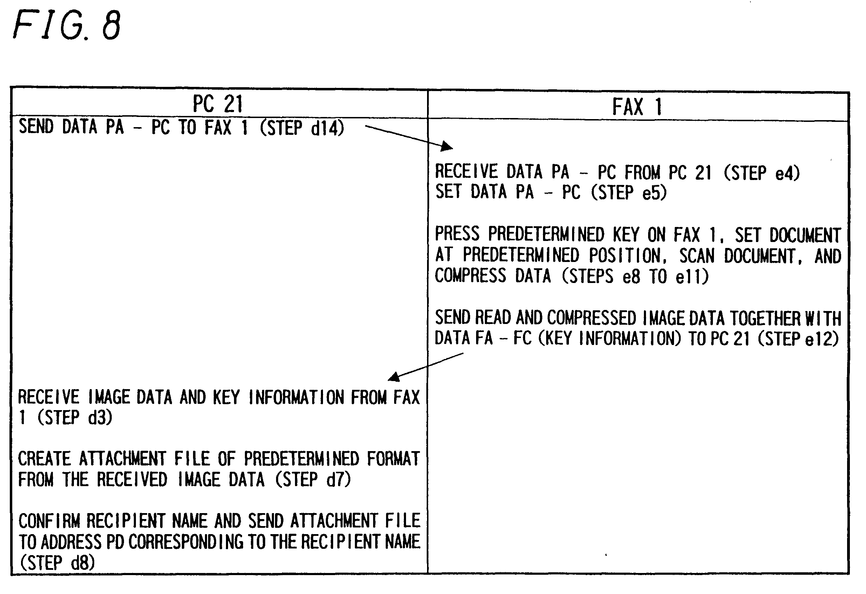

Fig. 8 shows the sequence for delivering by e-mail image data that has been read in by the scanner unit 2 of the facsimile apparatus 1. First, the power of the facsimile apparatus 1 and the information processing apparatus 21 is turned on. The information processing apparatus 21 periodically waits for a signal synchronizing it with the facsimile apparatus 1, and when the information processing apparatus 21 receives such a synchronization signal, it sends the data PA to PC to the facsimile apparatus 1 (step d14).

Subsequently, the facsimile apparatus 1 performs a receiving process (step e4), and the data FA to FC corresponding to the data PA to PC is set (step e5). Then, a predetermined key on the facsimile apparatus 1 is pressed, the document with the image to be sent by e-mail is set to a predetermined position in the scanner unit 2, the document is scanned, and the image data that has been read in is compressed (steps e8 to e11). Then, together with the data FA to FC (key information), the read and compressed image data is sent to the information processing apparatus 21 (step e12). The parameters that have been set for reading in the image data, such as the resolution or the size of the document, is sent as well.

Subsequently, the information processing apparatus 21 performs a receiving process (step d3), creates an attachment file of predetermined format from the received image data (step d7), verifies the recipient name, and sends the created attachment file to the address corresponding to the recipient name (step d8). The format of the attachment file can be set by the user of the information processing apparatus 21 as appropriate.

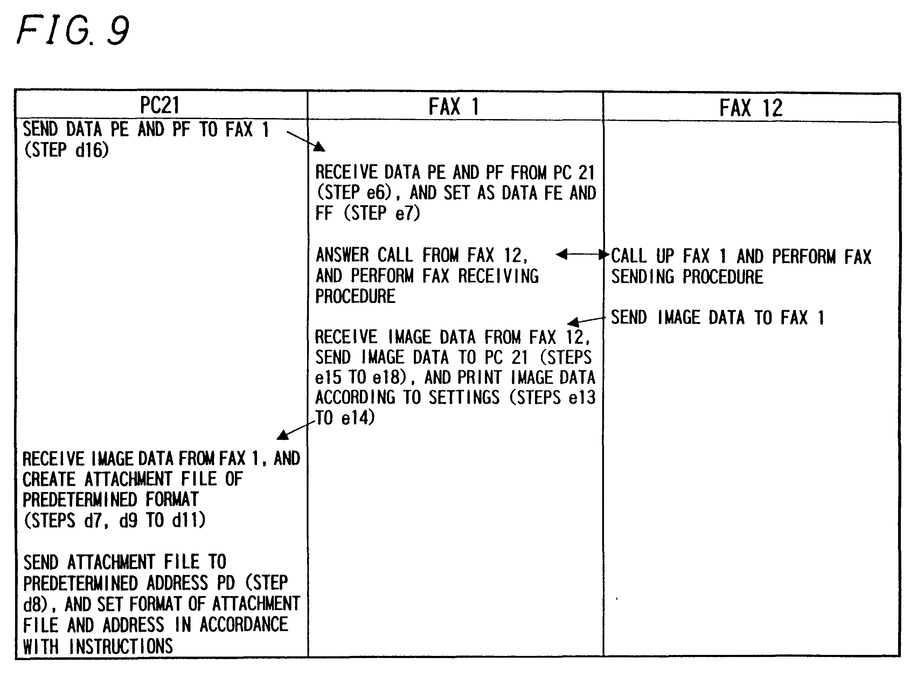

Fig. 9 shows the sequence for delivering by e-mail image data that has been received by facsimile with the facsimile apparatus 1. First, the power of the facsimile apparatus 1 and the information processing apparatus 21 is turned on. The information processing apparatus 21 periodically waits for a signal synchronizing it with the facsimile apparatus 1, and when the information processing apparatus 21 receives such a synchronization signal, it sends the data PE and PF to the facsimile apparatus 1 (step d16).

Subsequently, the facsimile apparatus 1 performs a receiving process (step e6), and the data FE and FF corresponding to the data PE and PF is set (step e7). Then, the facsimile apparatus 12 calls up the facsimile apparatus 1 and performs a facsimile sending procedure, whereas the facsimile apparatus 1 answers and performs a facsimile receiving procedure. After these procedures have been terminated, the facsimile apparatus 12 on the calling side sends the image data to the facsimile apparatus 1. The facsimile apparatus 1 receives the image data from the facsimile apparatus 12 and sends them to the information processing apparatus 21 (steps e15 to e18). When the data received by facsimile is set to be printed, a printing process is carried out (steps e13 and e14).

Subsequently, the information processing apparatus 21 receives the image data from the facsimile 1, creates an attachment file of predetermined format (steps d7, d9 to d11), and sends the created attachment file to a predetermined recipient address (step d18). The format of the attachment file can be set by the user of the information processing apparatus 21 as appropriate, and the recipient address can be specified by the user of the information processing apparatus 21 as appropriate, and when it has been specified, the received image data is sent to the specified recipient address.

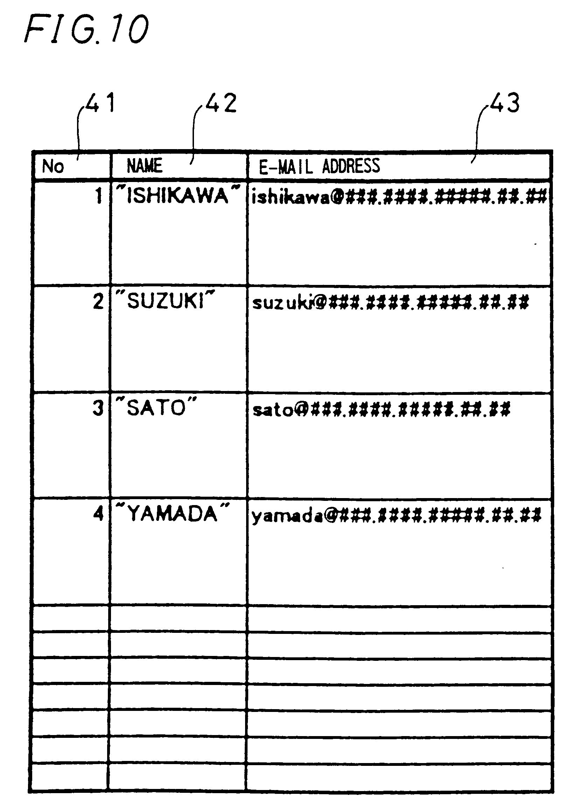

Fig. 10 illustrates the stored content of the hard disk unit 24 of the information processing apparatus 21. At step d13, a number 41 representing the predetermined key of the facsimile apparatus 1, the name 42 of a recipient, and his/her e-mail address 43 are stored in correlation to one another in the hard disk unit 24 of the information processing apparatus 21, based on the data PA to PD that has been input at step d12.

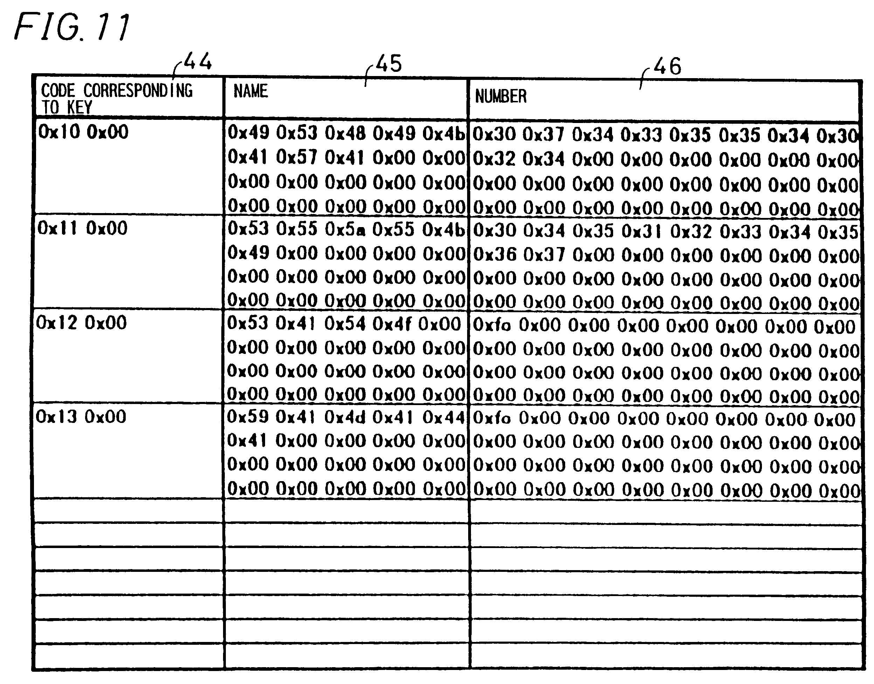

Fig. 11 illustrates the data sent from the information processing apparatus 21 to the facsimile apparatus 1. At step d14, a key-code 44 representing a predetermined key of the facsimile apparatus 1, a recipient name 45, and a number 46 representing an e-mail address are sent in correlation to one another to the facsimile apparatus 1, based on the data 41 to 43 that has been stored on the hard disk unit 24 of the information processing apparatus 21 at step d13. Furthermore, at step e4, the facsimile apparatus 1 receives the data 44 to 46.

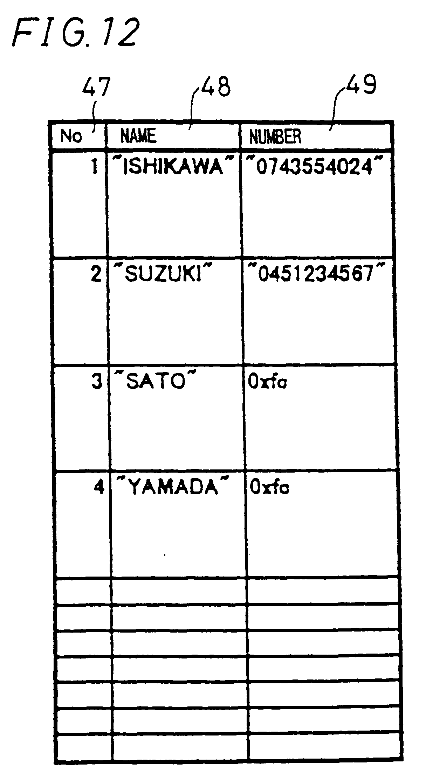

Fig. 12 illustrates the stored content of the memory unit 8 of the facsimile apparatus 1. At step e5, a number 47 representing the predetermined key of the facsimile apparatus 1, the name 48 of the recipient, and a number 49 representing the e-mail address are stored in correlation to one another in the memory unit 8 of the facsimile apparatus 1, based on the data 44 to 46 that has been received by the facsimile apparatus at step e4. Furthermore, at step e12, the facsimile apparatus 1 sends the data 47 to 49 as key information.

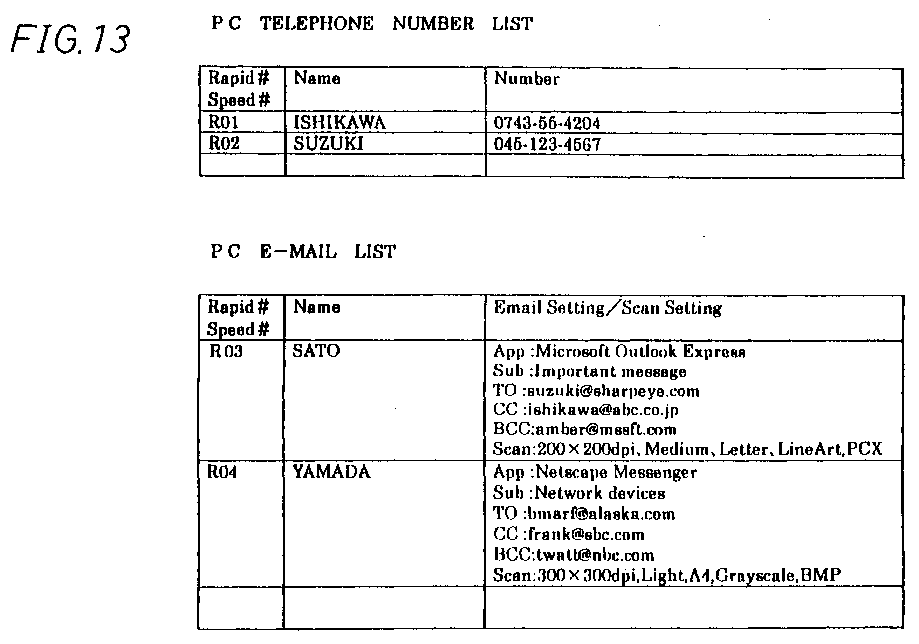

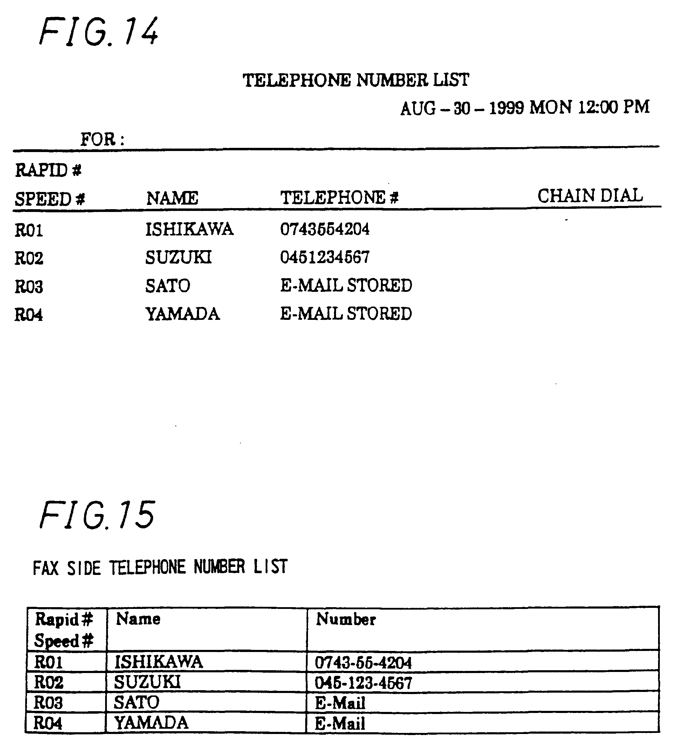

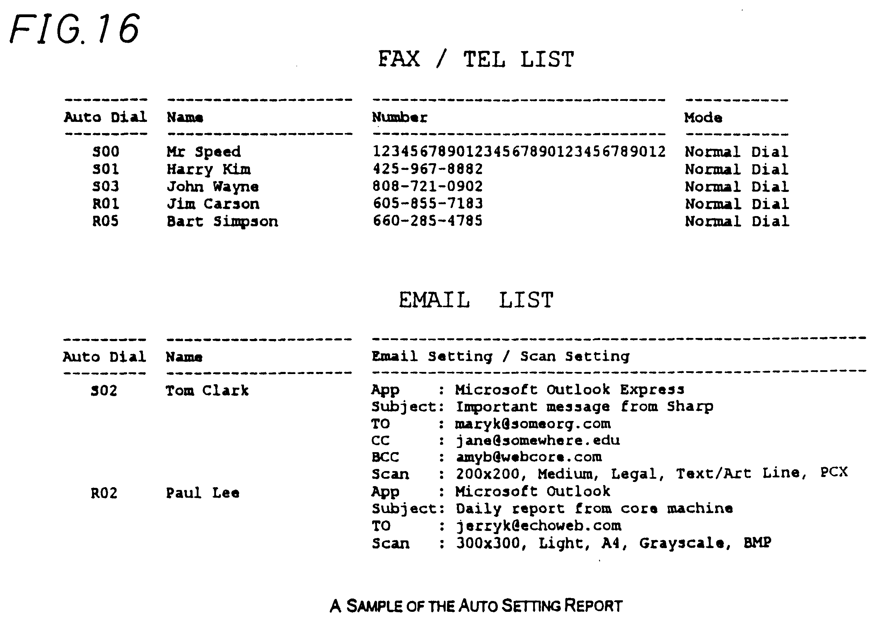

Figs. 13 and 14 illustrate print-out examples of the data stored in the information processing apparatus 21. These print-out examples have been output with the information processing apparatus 21. Figs. 15 and 16 illustrate print-out examples of the data stored in the facsimile apparatus 1. These print-out examples have been output with the facsimile apparatus 1. Here, telephone numbers have been set for the rapid key R01 and the rapid key R02, and e-mail lists have been set for the rapid key R03 and the rapid key R04.

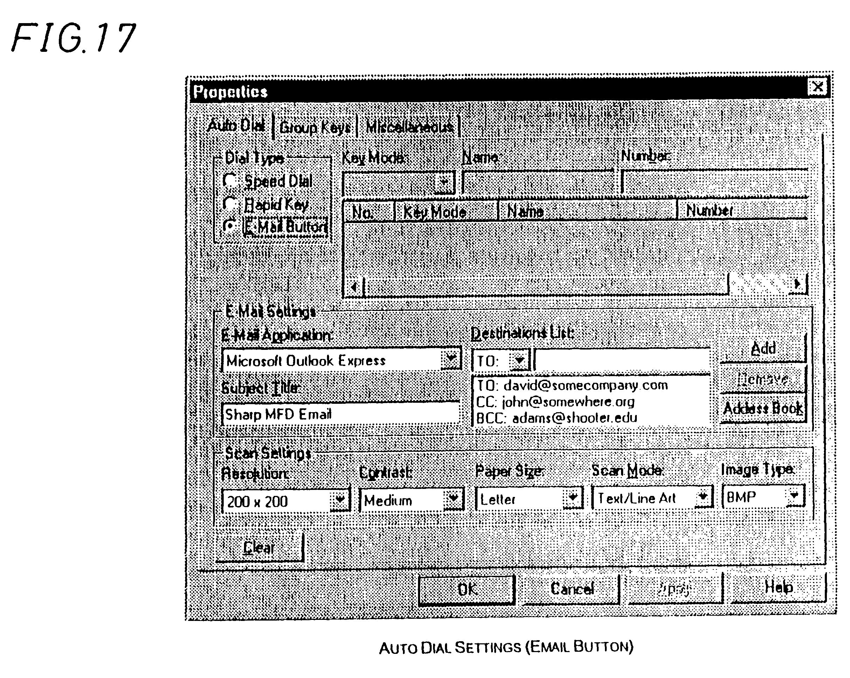

Fig. 17 illustrates an application example on the side of the information processing apparatus 21 when delivering an e-mail. The screen shown in Fig. 17 is displayed when the e-mail key of the information processing apparatus 21 is pressed at step cl of the afore-mentioned Fig. 5. With this screen, the user of the information processing apparatus 21 creates a subject title (step C2), sets an e-mail (step c3), sets the scanner (step c4), creates an attachment file of a predetermined format (step c5), and creates and e-mail address book (step c6).

Configurations, in which the facsimile apparatus 1 comprises image data deleting means for deleting image data that has been received by facsimile, and in which, after receiving image data or after printing the received image data, the image data is deleted, come within the scope of the invention. In such a configuration, obsolete image data can be deleted from the image data storage means of the facsimile apparatus 1, so that the storage means can be used efficiently. By deleting the image data after the printing, it is possible to later verify the image data received by facsimile and delivered by e-mail. It is possible to treat received image data differently depending on their importance, for example to delete not so important image data without printing them, and to delete more important image data after printing them.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A facsimile apparatus (1) comprising:
facsimile sending/receiving means (4) for sending and receiving image data by facsimile over a connected public switched telephone network (13);
reading means (2) for reading image data;
printing means (9) for printing image data;
a plurality of keys (6);
a connection interface (11) for connection to an information processing apparatus (21) provided with the capability of sending and receiving messages by e-mail over a connected network;
storing means (8) for storing key data (FA) representing a predetermined key of the plurality of keys (6), setting data (FB) for setting this key data (FA) to e-mail mode, and recipient name data (FC) corresponding to the key data (FA); and
sending means (7) for sending the image data, key data (FA), setting data (FB), and recipient name data (FC) over the connection interface (11) to the information processing apparatus (21) when the predetermined key has been actuated.

2. The facsimile apparatus (1) of claim 1, further comprising:
receiving means (7) for receiving the key data (FA), the setting data (FB), and the recipient name data (FC) over the connection interface (11) from the information processing apparatus (21) and setting them.

3. The facsimile apparatus (1) of claim 1, wherein the image data that is sent by the sending means (7) is read in by the reading means (2).

4. The facsimile apparatus (1) of claim 1, wherein the image data sent by the sending means (7) is image data that has been received by facsimile with the sending/receiving means (4).

5. The facsimile apparatus (1) of claim 4, further comprising:
data deleting means (7) for deleting the image data received by the facsimile sending/receiving means (4) before or after printing the image data.

6. An information processing apparatus (21) provided with a capability of sending and receiving messages by e-mail over a connected network (30), and connected to a facsimile apparatus (1) comprising facsimile sending/receiving means (4) for sending and receiving image data by facsimile over a connected public switched telephone network (13); reading means (2) for reading image data; printing means (9) for printing image data; and a plurality of keys (6), the information processing apparatus (21) comprising:
storing means (24) for storing key data (PA) representing a predetermined key of the plurality of keys (6) that the connected facsimile apparatus (1) is provided with, setting data (PB) for setting this key code (PA) to e-mail mode, recipient name data (PC) corresponding to the key code (PA), and a recipient address (PD) corresponding to the key data (PA); and
receiving means (22) for receiving image data, key data (FA), setting data (FB), and recipient name data (FC) from the connected facsimile apparatus (1),
wherein the key data (PA) matching with the key data (FA) received from the facsimile apparatus (1) is retrieved from the storing means (24), it is determined whether the recipient name data (PC) corresponding to the retrieved key data (PA) match with the recipient name data (FC) received from the facsimile apparatus (1), and the received image data is sent by e-mail to the recipient address (PD) corresponding to the matching retrieved recipient name data (PC).

7. The information processing apparatus (21) of claim 6, further comprising:
sending means (22) for sending the key data (PA), the setting data (PB) and the recipient name data (PC) to the connected facsimile apparatus (1).

8. A method for data communication between the facsimile apparatus (1) of claim 1 and the information processing apparatus (21) of claim 6, comprising the steps of:
sending image data, key data (FA), setting data (FB) and recipient name data (FC) from the facsimile apparatus (1) to the information processing apparatus (21) when actuating a predetermined key of the facsimile apparatus (1); and
receiving the image data, the key data (FA), the setting data (FB), and the recipient name data (FC) with the information processing apparatus (21) from the facsimile apparatus (1), and sending the received image data by e-mail, based on the received key data (FA), setting data (FB), and recipient name data (FC).

9. The method for data communication of claim 8, wherein the facsimile apparatus (1) further comprises receiving means (7) for receiving the key data (FA), the setting data (FB), and the recipient name data (FC) over the connection interface (11) from the information processing apparatus (21) and setting them.

10. The method for data communication of claim 8, wherein the image data that is sent by the sending means (7) of the facsimile apparatus (1) is read in by the reading means (2).

11. The method for data communication of claim 8, wherein the image data sent by the sending means (7) is image data that has been received by facsimile with the sending/receiving means (4) of the facsimile apparatus (1).

12. The method for data communication of claim 11, wherein the facsimile apparatus (1) comprises data deleting means (7) for deleting the image data received by the facsimile sending/receiving means (4) before or after printing the image data.

13. The method for data communication of claim 8, wherein the information processing apparatus (21) comprises sending means (22) for sending the key data (PA), the setting data (PB) and the recipient name data (PC) to the connected facsimile apparatus (1).

14. A facsimile apparatus which is adapted to communicate image data generated at said apparatus by document scanning or received by said apparatus via facsimile to an information processing apparatus having e-mail functionality, the apparatus having data storage means for storing key data identifying a predetermined user-input key instruction as an e-mail mode and recipient data associated with said key instruction, and the apparatus being operable in response to the predetermined user-input key operation for sending the key and recipient data to the information processing apparatus along with image data to be e-mailed to the recipient identified by the recipient data.

15. An information processing apparatus having e-mail functionality and adapted to receive from a facsimile apparatus according to claim 14 the key and recipient data sent therefrom in response to said predetermined user-input key operation, the information processing apparatus being operable when received key data matches stored key data to determine whether a received recipient data associated with the received key data matches stored recipient data associated with the stored key data, and in the event of a match to send by e-mail to the identified recipient the image data received from the facsimile apparatus.
